# EUROPEAN PATENT APPLICATION

(11) **EP 2 099 176 A1**
(43) Date of publication of application: **09.09.2009**
(21) Application number: 07024563.4
(22) Date of filing: 18.12.2007
(51) Int. Cl.: H04L 12/56

(54) **Method and device for adapting a buffer of a terminal and communication system comprising such device**

(71) Applicant: Nokia Corporation, 02150 Espoo (FI)
(72) Inventor: Ranta-Aho, Karri, 02650 Espoo (FI); Toskala, Antti, 02180 Espoo (FI); Hwang, Woonhee, 02180 Espoo (FI); Barreto, Luis, Camberley GU15 1RQ (GB)
(74) Representative: Tognetty, Virpi Maria

(57) **Abstract**

A method and a device for adapting a buffer of a terminal are provided, said method comprising the steps of (i) a network provides data to the terminal; and (ii) the terminal adapts its buffer based on the data provided. Furthermore, a communication system comprising such a device is provided.

## Description

The invention relates to a method and to a device for adapting a buffer of a terminal and to a communication system comprising such a device.

Current mobile telephony systems such as Wideband Code Division Multiple Access (WCDMA) are designed to deliver circuit switched voice traffic with a fixed delay over the radio interface. Whenever a data packet carrying a digitally encoded voice frame arrives from a core network at a Radio Network Controller (RNC) it will pass the data packet to a base station (e.g., a NodeB) over an Iub interface, and the base station is going to forward the data packet over the radio interface.

This enables the packets to arrive at a constant and at an invariable rate at a mobile terminal, in particular at a User Equipment UE. This User Equipment will hence be able to immediately deliver the packets - at a constant and invariable rate - to a voice decoder that converts the digital voice frames to voice signals that are eventually to be played - at a constant and invariable rate - from a speaker of the User Equipment.

It is understandable that if the data packets would experience variable delay over the radio interface then the end result would be intolerably poor voice quality when some fragments of the speech would be delayed more than other fragments.

In a systems like Voice over Internet Protocol (VoIP) where the digitally encoded voice frames are delivered over a packet switched network there is no guarantee that such delivery is processed at a fixed delay and hence that the voice frames are conveyed at a constant rate from mouth to ear.

Hence, packet switched networks employ de-jittering at the receiver, where the receiver buffers the arriving voice frames over a certain time period and then provides the packet to a codec. The codec plays the voice frames at a constant rate via the speaker of the User Equipment.

The buffer (at the receiver) tries to absorb delay variances introduced by the packet switched network by providing a sufficiently large memory space.

Ongoing 3GPP activities relate to a possibility to route circuit switched services over High-Speed Packet Access (HSPA) radio. Regarding a downlink (from the network towards the User Equipment) direction , e.g., voice frames conveyed via the circuit switched core network are mapped to High-Speed Downlink Packet Access (HSDPA) radio. HSDPA radio utilizes a Hybrid-ARQ (Automatic Repeat reQuest) and a channel sensitive scheduling mechanisms to enhance the radio capacity and to increase a reliability of the transmission. However, both techniques introduce uncertainty to the delay a particular packet may experience from the moment it arrives at the base station buffer to the moment it is actually successfully delivered to the User Equipment.

In the past, the mobile radio and core networks ensured that the circuit switched services experience a constant end-to-end delay and there has been no need to deal with delay jitter at the receiving end of a circuit switched service connection.

In particular, when mapping circuit switched services on HSDPA radio, the User Equipment experiences delay jitter that is detrimental to an application such as, e.g., a voice and/or a video service.

Thus, the User Equipment needs to implement a jitter buffer that compensates for the delay jitter the HSDPA HARQ and the scheduling mechanism introduce. In order to provide an improved service quality (in particular a low end-to-end delay for the respective service), the buffer length should be as short as possible. On the other hand, in order to ensure very low packet drop rate, the buffer length should be long enough that it always or at least almost always may be able to compensate any jitter introduced by the HSDPA radio.

The **problem** to be solved is to avoid the disadvantages described above and in particular to provide an approach that allows to efficiently compensate delay-jitter introduced by a packet switched network utilizing circuit switched services.

This problem is solved according to the features of the independent claims. Further embodiments result from the depending claims.

In order to overcome this problem, a method for adapting a buffer of a terminal is provided, said method comprising the steps:
- a network provides data to the terminal;
- the terminal adapts its buffer based on the data provided.

The approach provided allows for delivering delay-sensitive services, such as voice or video over a communications interface that introduces delay jitter to the packets. In one particular scenario this approach relates to a delivery of a digitally encoded voice (or video) call over a radio interface from a radio access network to a terminal device, in particular to a mobile terminal, wherein a radio access network is not able to guarantee a fixed delay for packets delivered to the terminal device. However, the radio access network may be aware of some of the delay characteristics, such as a maximum delay based on Quality of Service (QoS) information for the service and/or on its own knowledge and/or on (further) configuration data.

Hence the radio access network may, e.g., via a Radio Network Controller, convey a signaling information relating to a maximum or any delay expected to the terminal. The terminal itself may be arranged such to utilize the information provided by the Radio Network Controller. As an example, the terminal may adapt a de-jitter buffer management and/or it may set up a fixed delay.

As a particular scenario, the approach provided may relate to circuit switched voice and/or video services provided via a HSDPA radio interface.

In an embodiment, the terminal adapts a size of its buffer based on the data provided by the network.

In another embodiment, the data comprises information relating to a delay, in particular to a jitter delay.

In a further embodiment, said data is provided by an operator and/or by a network provider.

In particular, said delay may be deterministic and/or known (e.g., due to measurements) by the operator or provider and hence utilized in order to efficiently run the network and/or at least one particular service. For example, the operator may know what jitter delay to be suitable for its customers for providing a desired end user experience, e.g., under a given system load. Hence, according to the approach suggested herein, the operator is able to dynamically convey this information to the respective terminal and/or to adjust the terminal's delay buffer.

In a next embodiment, the buffer at the terminal is adapted to improve a circuit switched service, in particular a circuit switched voice and/or video service.

An exemplary method for performing the actual adaptation of the jitter buffer size and/or length would be during a silent phase of the speech when no data is due to be delivered to the voice decoder. The delay of a subsequent voice packet to be played is either reduced or increased when delivering it to the voice decoder thereby facilitating the change of the jitter buffer size and/or length.

Another example of such adaptation is to drop at least one voice packet and hence be able to deliver all the subsequent voice packets to the decoder at a shorter overall delay.

Alternatively or in addition, at least one voice packet may be sent twice (or multiple times) to the voice decoder thereby delivering all subsequent voice packets to the decoder with a longer overall delay.

It is to be noted that these examples may be adapted to services other than voice as well.

Hence, a packet switched network may efficiently be used for circuit switched services.

It is also an embodiment that the network and the terminal exchange information via a packet radio protocol, in particular via a High-Speed Packet Access (HSPA) technology.

The technology used may in particular be High-Speed Downlink Packet Access (HSDPA).

Pursuant to another embodiment, adapting the buffer comprises at least one of the following:
- modifying the buffer;
- configuring the buffer;
- setting up the buffer.

According to an embodiment, adapting the buffer comprises adapting a size and/or a length of said buffer.

According to another embodiment, the terminal is a mobile terminal, in particular a User Equipment (UE).

In yet another embodiment, the terminal adapts the buffer based on a value determined and/or stored at the terminal.

In addition, the terminal may be enabled to use a predefined value for setting up its buffer. Such value may be stored at the terminal itself.

According to a next embodiment, the buffer is adapted to be lower than a predetermined packet delay jitter.

Pursuant to yet an embodiment, adapting the buffer comprises adapting a (maximum) packet delay jitter value.

The delay jitter value may be related to a discard timer.

Said discard timer may in particular be used to decide on a (maximum) packet delay jitter value.

Pursuant to a further embodiment, the network is a radio network.

According to yet a further embodiment, the data is provided to the terminal by a Radio Network Controller (RNC).

According to another embodiment, the data is provided to the terminal via a Radio Resource Control (RRC) protocol.

It is also an embodiment that the data is provided to the terminal via a base station, in particular via a NodeB.

The problem stated above is also solved by a device comprising a processor unit that is equipped and/or arranged such that the method as described herein is executable on said processor unit.

According to an embodiment, the device is a communication device.

The device may in particular be, comprise or be associated with a Radio Network Controller (RNC) providing said data to the terminal.

As an alternative, said device may be, comprise or be associated with a User Equipment (UE), wherein the device is arranged such that it adapts a buffer based on the data received from the network.

The problem stated supra is further solved by a communication system comprising the device as described herein.

Embodiments of the invention are shown and illustrated in the following figure:

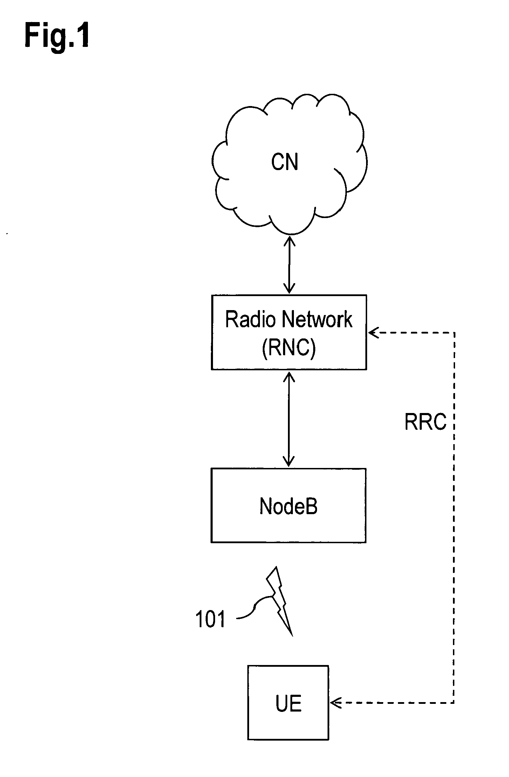

- Fig.1: illustrates a scenario of a network that is utilized for jitter buffer management for delay sensitive services such as, e.g. voice and/or video data conveyed over a packet switched technology.

In High-Speed Downlink Packet Access (HSDPA) radio a Radio Network Controller (RNC) may in particular be in control of the maximum packet delay introduced by HSDPA radio. The RNC may in particular add a discard timer in a base station (e.g., NodeB) to a (each) logical connection to a User Equipment (UE).

In case the base station (e.g., NodeB) is for some reason not capable of delivering a packet within a given time frame defined by the discard timer, the base station will drop the packet and it may preferably not even try sending it any more to the UE. Thus, the discard timer sets a maximum packet delay for a logical connection that the UE may experience.

However, the value of the discard timer may set the maximum delay, but in minor loaded systems packet delays may rarely reach the maximum delay set for the connection. Thus, buffering always for the maximum delay in the User Equipment's jitter buffer could introduce a larger delay than necessary for a particular connection.

In particular in order to efficiently utilize a buffer at the User Equipment regarding a particular connection, the approach presented may consider the following steps:
a) The RNC may signal a maximum packet delay jitter value (which may be based on a discard timer value which is signaled from the RNC to the base station (NodeB)) to the UE relating to a logical connection used for a circuit switched service. Concerning this matter, the RNC may utilize the RRC protocol.
b) The UE may adapt its buffer length pursuant to the information received by the RNC. In particular, the UE may adapt the length of its buffer to be less than a given maximum packet delay jitter (value) if the UE experiences a distribution of sufficiently minor delay. However, if the delay starts to increase, the UE may adapt its buffer size accordingly, but preferably the total buffer size still may be below a threshold value provided by the RNC. Alternatively or in addition, such threshold value may also be determined and/or provided by the UE itself.
c) The UE may in particular use a given maximum packet delay jitter for a fixed de-jitter buffering delay.

In addition, the jitter buffer implementation can benefit from the fact that an overall range of said delay is known, e.g., by the network and/or by the operator (or provider). Such knowledge can be used when the information or data regarding the delay expected is signaled from the RNC to the UE. Hence, the dimension of a memory to be allocated as jitter buffer at the UE can be based on the maximum value for the delay set in the signaling range.

**Fig.1** shows a diagram of a network scenario utilized for jitter buffer management for delay sensitive services.

A core network CN is connected to a Radio Network that in particular comprises a Radio Network Controller RNC. The Radio Network Controller RNC is further connected to at least one base station NodeB and the NodeB has a radio link 101 to at least one User Equipment UE.

The Radio Network via its Radio Network Controller RNC utilizes a Radio Resource Control (RRC) protocol to convey data to the UE relating to the jitter delay that can be used by the UE to adapt its buffer size. Regarding the RRC protocol messages, the base station NodeB may transparently forward RRC messages issued by the RNC to the UE.

### Implementation options and further advantages:

- The RNC may set forth a(n initial) size of a discard timer value and forward it to the base station (NodeB) for a particular circuit switched connection.
- The base station (NodeB) may schedule the downlink transmissions in order to deliver the packet successfully before the discard timer expires.
- If the base station (NodeB) scheduler fails to deliver the packet successfully within the time limit set by the discard timer, it will drop the packet.
- The RNC may signal a maximum delay jitter value to the UE. This maximum delay jitter value may depend on the discard timer value, but it may also be, e.g., a little shorter than that discard timer value, because the maximum delay may be expected to be a little more than what is set as the maximum delay jitter value.
- Configuring its jitter buffer size, the UE knows that such size may in particular not buffer a longer time than a signaling time of the RNC. However, if the packet delay jitter distribution is substantially lower than the maximum delay jitter, the UE may shorten its buffering delay (by reducing the buffer size) to be less than the given value.
- For an alternative implementation, the UE can use the maximum delay jitter value or the discard timer to set a fixed delay of its de-jitter buffer.

There may be various reasons for a network operator or a network provider to adapt a setting of discard timers for different users: For example, a long discard timer value leads to a better radio capacity, because of better scheduling flexibility. Hence, if the operator chooses to emphasize capacity over delay, the high discard timer value can be set.

Also, the RNC may have information available or collected regarding an accumulated delay of incoming flows of circuit switched packets arriving at the RNC. If a connection to another communicating party is known to be fast, additional delay may be acceptable at this end of the connection still allowing an advantageous end-to-end delay for the service.

If the other end of the service is known to run Voice over IP that is typically considered to be a service that allows slightly impaired packet delays, the discard timer can be set to a higher value compared to a scenario where a call arrives from, e.g., a landline phone.

It is to be noted that there is a benefit in allowing the RNC to adjust the discard timer and the maximum delay jitter allowed for the HSDPA radio downlink.

### List of abbreviations:

- 3GPP: 3rd Generation Partnership Project (a standards development organization developing, e.g., WCDMA standard)
- BTS: Base Transceiver Station (NodeB)
- CS: Circuit Switched
- DL: Downlink
- HARQ: Hybrid Automatic Repeat reQuest
- HSDPA: High-Speed Downlink Packet Access
- NodeB: Base Station
- QoS: Quality of Service
- RNC: Radio Network Controller
- RRC: Radio Resource Control
- UE: User Equipment
- VoIP: Voice over Internet Protocol
- WCDMA: Wideband Code Division Multiple Access

## Claims

1. A method for adapting a buffer of a terminal comprising the following steps:
- a network provides data to the terminal;
- the terminal adapts its buffer based on the data provided.

2. The method according to claim 1, wherein the terminal adapts a size and/or a length of its buffer based on the data provided by the network.

3. The method according to any of the preceding claims, wherein the data comprises information relating to a delay, in particular to a jitter delay.

4. The method according to any of the preceding claims, wherein said data is provided by an operator and/or by a network provider and/or derived from a Quality of Service parameter for the service.

5. The method according to any of the preceding claims, wherein the buffer at the terminal is adapted to improve a circuit switched service, in particular a circuit switched voice and/or video service.

6. The method according to any of the preceding claims, wherein the network and the terminal exchange information via a packet radio protocol, in particular via a High Speed Packet Access technology.

7. The method according to any of the preceding claims, wherein adapting the buffer comprises at least one of the following:
- modifying the buffer;
- configuring the buffer;
- setting up the buffer.

8. The method according to any of the preceding claims, wherein adapting the buffer comprises adapting a size and/or a length of said buffer.

9. The method according to any of the preceding claims, wherein the terminal is a mobile terminal, in particular a User Equipment.

10. The method according to any of the preceding claims, wherein the terminal adapts the buffer based on a value determined and/or stored at the terminal.

11. The method according to any of the preceding claims, wherein the buffer is adapted to be lower than a predetermined packet delay jitter.

12. The method according to any of the preceding claims, wherein adapting the buffer comprises adapting a packet delay jitter value.

13. The method according to claim 12, wherein the delay jitter value is related to a discard timer.

14. The method according to any of the preceding claims, wherein the network is a radio network.

15. The method according to any of the preceding claims, wherein the data is provided to the terminal by a Radio Network Controller.

16. The method according to any of the preceding claims, wherein the data is provided to the terminal via an RRC protocol.

17. The method according to any of the preceding claims, wherein the data is provided to the terminal via a base station, in particular via a NodeB.

18. A device comprising a processor unit that is equipped such that the method according of any of the preceding claims is executable on said processor unit.

19. The device according to claim 18, wherein said device is a communication device.

20. The device according to any of claims 18 or 19, wherein said device comprises or is associated with a Radio Network Controller.

21. The device according to any of claims 18 to 20, wherein said device comprises or is associated with a mobile terminal, in particular with a User Equipment.

22. Communication system comprising the device according to any of claims 18 to 21.
